# EUROPÄISCHE PATENTANMELDUNG

(11) **EP 0 545 057 A1**
(43) Veröffentlichungstag der Anmeldung: **09.06.1993**
(21) Anmeldenummer: 92118095.6
(22) Anmeldetag: 22.10.1992
(51) Int. Cl.: B29C 65/18, B29C 65/78, B31B 19/64, B31B 19/74

(54) **Vorrichtung zum Anbringen von Querschweissnähten und Quertrennschnitten bzw. Querperforationslinien an Schlauchbahnen**

(30) Priorität: 02.12.1991 DE 4139698
(71) Anmelder: Windmöller & Hölscher, D-49525 Lengerich (DE)
(72) Erfinder: Achelpohl, Fritz, W-4543 Lienen (DE); Mundus, Friedhelm, Dipl.-Ing., W-4540 Lengerich (DE)
(74) Vertreter: Laufhütte, Dieter, Dr.-Ing.

(57) **Zusammenfassung**

Die vorliegende Erfindung betrifft eine Vorrichtung zum Anbringen von Querschweißnähten und Quertrennschnitten bzw. Querperforationslinien an einer intermittierend vorgeschobenen und/oder vorgetragenen Schlauch- oder Halbschlauchfolienbahn (10) aus thermoplastischem Kunststoff mit jeweils zusammenwirkenden Vorzugswalzenpaaren (12,14,20), einer Querschweißvorrichtung und einer Trennschnitt- bzw. Perforationslinienvorrichtung (24,31). Zur Lösung der Aufgabe, bei gleichbleibender Schweißqualität die Produktionskapazität einer derartigen Vorichtung zu erhöhen, besteht die zwischen zwei Vorzugswalzenpaaren (12,14) angeordnete Querschweißvorrichtung aus mindestens zwei quer zur Schlauchfolienbahn ausgerichteten Schweißbackenpaaren (16,18), die um wenigstens eine Beutellänge in Bewegungsrichtung der Schweißfolienbahn voneinander beabstandet sind. Weiterhin ist dieser Querschweißvorrichtung ein einziges quer zur Schlauchfolienbahn verlaufendes Trenn- bzw. Perforationsmesser (24,31) nachgeordnet.

## Beschreibung

Die Erfindung betrifft eine Vorrichtung zum Anbringen von Querschweißnähten und Quertrennschnitten bzw. Querperforationslinien an einer intermittierend vorgeschobenen und/oder vorgetragenen Schlauch- oder Halbschlauchfolienbahn aus thermoplastischem Kunststoff mit jeweils zusammenwirkenden Vorzugswalzenpaaren, einer Querschweißvorrichtung und einer Trennschnitt- bzw. Perforationslinienvorrichtung.

Es sind bereits derartige Vorrichtungen bekannt, in welchen eine entsprechende flachgelegte Halbschlauchfolienbahn jeweils um eine Beutellänge intermittierend vorgezogen wird und in einer entsprechenden Querschweißvorrichtung mittels eines zusammenfahrbaren Schweißbackenpaares quergeschweißt wird. In der Regel wird unmittelbar hinter der Querschweißvorrichtung ein entsprechendes Trenn- bzw. Perforationsmesser quer zur Schlauchfolienbahn verlaufen, so daß gleichzeitig mit dem Anbringen der Querschweißnaht, d.h. beispielsweise der Bodenschweißnaht, der entsprechende Trennschnitt bzw. die entsprechende Perforationslinie vorgesehen wird. Bei derartigen Vorrichtungen ist die Taktgeschwindigkeit und damit die Herstellungsgeschwindigkeit der Beutel bzw. Säcke durch die Schweißzeit limitiert. Will man die Produktionsgeschwindigkeit derartiger Vorrichtungen durch entsprechende schnellere Taktung beschleunigen, besteht die Gefahr, daß nicht mehr genügend Zeit zur Verschweißung der Schlauchfolienbahn zur Verfügung steht, so daß die Qualität der Schweißnähte nicht mehr den zu stellenden Anforderungen genügt.

Somit stellt sich die Aufgabe, eine gattungsgemäße Vorrichtung derart weiterzubilden, daß bei vergleichsweise hoher Produktionsgeschwindigkeit trotzdem hinreichend Zeit für den Schweißvorgang verbleibt, so daß Beutel bzw. Säcke mit qualitativ einwandfreien Schweißnähten hergestellt werden können.

Erfindungsgemäß wird diese Aufgabe ausgehend von dem zuvorgenannten gattungsgemäßen Stand der Technik gemäß der Lehre des kennzeichnenden Teils des Hauptanspruchs dadurch gelöst, daß die zwischen zwei Vorzugswalzenpaaren angeordnete Querschweißvorrichtung aus mindestens zwei quer zur Schlauchfolienbahn ausgerichteten Schweißbackenpaaren besteht, die um wenigstens eine Beutellänge in Bewegungsrichtung der Schlauchfolienbahn voneinander beabstandet sind, und daß dieser Querschweißvorrichtung ein einziges quer zur Schlauchfolienbahn verlaufendes Trenn- bzw. Perforationsmesser nachgeordnet ist. Gemäß der Erfindung wird bei einem einzigen Takt ein entsprechend langes Schlauchfolienbahnstück in die Querschweißvorrichtung vorgezogen. Dort werden durch die jeweils um eine Beutellänge voneinander beabstandeten Schweißbackenpaare gleichzeitig mehrere Querschweißnähte angebracht. Nach Verschweißen der Folienbahn wird dann das entsprechende Schlauchfolienbahnstück aus der Querschweißvorrichtung herausgefahren und von dem nachfolgenden Trenn- bzw. Perforationsmesser geschnitten, wobei dieses dann im doppelten bzw. dreifachen, vierfachen etc. Takt schneidet bzw. perforiert. Bei dieser Lösung wird demnach die Erkenntnis genutzt, daß die Zeit zum Schneiden der Folienbahn vergleichsweise wesentlich geringer ist als die Schweißzeit. Mittels dieser Vorrichtung kann die Produktionsgeschwindigkeit gegenüber herkömmlichen Vorrichtungen mehr als verdoppelt werden, wobei gleichzeitig gewährleistet ist, daß für die Herstellung der Querschweißnähte hinreichende Schweißzeiten zur Verfügung stehen.

Die entsprechend geschnittenen bzw. perforierten Beutelabschnitte können in an sich bekannter Weise aufgenadelt, gestapelt bzw. wieder aufgerollt werden.

Gemäß einer Ausgestaltung der Erfindung ist vor dem Trenn- bzw. Perforationsmesser ein weiteres Vorzugswalzenpaar angeordnet. Gleichzeitig ist zwischen dem in Bewegungsrichtung hinteren Vorzugswalzenpaar der Querschweißvorrichtung und diesem weiteren Vorzugswalzenpaar eine Tänzerwalze angeordnet, über die die Schlauchfolienbahn geführt ist. Hierdurch wird insbesondere für den Fall, daß die Beutel gestapelt werden, eine vorteilhafte Betriebsweise der Vorrichtung dadurch ermöglicht, daß die Schweißzeiten auch dann kontinuierlich ohne Unterbrechung bzw. Verzögerung beibehalten werden können, wenn nach Stapeln einer Anzahl von Beutein diese abtransportiert werden. Während der für den Abtransport zur Verfügung stehenden Zeitspanne, in welcher das Messer stillsteht, wird die Schlauchfolienbahn mit konstanter Taktzahl aus der Schweißvorrichtung herausgefördert. Gleichzeitig wird die Tänzerwalze ausgelenkt, so daß die entsprechend quergeschweißte Schlauchfolienbahn so lange zwischengelagert wird, bis nach entsprechendem Abtransport des Beutelstapels das Trennmesser entsprechend wieder die Schlauchfolienbahn unmittelbar vor bzw. nach den Querschweißtrennähten schneidet. Dabei wird die entsprechende Taktzahl beim Schneiden verglichen mit der kontinuierlichen Schweißtaktzahl erhöht, so daß die zwischengespeicherte Länge der geschweißten Schlauchfolienbahn bis zum nächsten Stillstand des Messers abgebaut wurde.

Im Bewegungsbereich der Tänzerwalze können zwei Fotozellen angeordnet sein, die zur Erfassung einer Grenzauslenkung der Tänzerwalzen dienen. Alternativ dazu kann im Bereich des Gestänges der Walze eine Schaltgabel angeordnet sein, bei der die Grenzauslenkung der Tänzerwalze über einen entsprechenden Berührungskontakt festgestellt wird. Diese signalgebenden Anordnungen zur Erfassung der Grenzauslenkung der Tänzerwalze ermöglichen eine weitere bevorzugte Betriebsweise der Vorrichtung. Gemäß dieser Ausführungsformen kann die Erhöhung der Schneidtaktzahl von der Steuerung zunächst konstant vorgegeben werden. Erreicht nun die Tänzerwalze einen der Grenzpunkte, wird ein entsprechendes Signal an die Taktsteuerung des Messers gegeben, so daß die Schneidfrequenz entsprechend erhöht bzw. erniedrigt wird.

In vorteilhafter Weise werden insbesondere die Vorzugswalzenpaare und das Trenn- bzw. Perforationsmesser über Servo-Motoren gesteuert angetrieben. Dabei kann zunächst eine Hauptsteuerung zur Steuerung der Gesamtmaschine und eine Steuerung zur Steuerung des Vorzugswalzenpaares vor dem Trenn- bzw. Perforationsmesser bzw. gegebenenfalls zusätzlich des Trenn- und Perforationsmessers vorgesehen sein. Gemäß einer möglichen Ausführungsform werden keine Quertrennschnitte vorgenommen, sondern die Schlauchfolienbahnen werden kurz vor bzw. kurz hinter den Querschweißnähten quer zur Laufrichtung perforiert. In diesem Fall ist in Bahnvorzugsrichtung gesehen hinter dem Perforationsmesser ein über einen Servo-Motor antreibbare mit einer Wiederaufwicklung zusammenwirkende Andrückrolle angeordnet, die über eine weitere Steuerung ansteuerbar ist.

Weitere Einzelheiten und Merkmale der vorliegenden Erfindung werden im folgenden anhand von in der Zeichnung dargestellten Ausführungsbeispielen näher erläutert. Es zeigen:
- Fig. 1:: eine erste Ausführungsform der erfindungsgemäßen Vorrichtung, in welcher die Beutel geschnitten und aufgenadelt werden,
- Fig. 2:: eine zweite Ausführungsform der vorliegenden Erfindung, in welcher die Schlauchfolienbahn geschnitten wird und in welcher die entsprechenden geschnittenen Beutel anschließend gestapelt werden,
- Fig. 3:: eine dritte Ausführungsform der vorliegenden Erfindung, bei der die Schlauchfolienbahn mit Querperforationen versehen wird und in der die entsprechend querperforierte Schlauchfolienbahn anschließend wieder aufgewickelt wird,
- Fig. 4:: eine erfindungsgemäße Ausführungsform, die im wesentlichen derjenigen gemäß Fig. 3 entspricht, wobei noch die geschnittenen Beutel nicht gestapelt, sondern kontinuierlich in eine Füllvorrichtung gefahren werden.

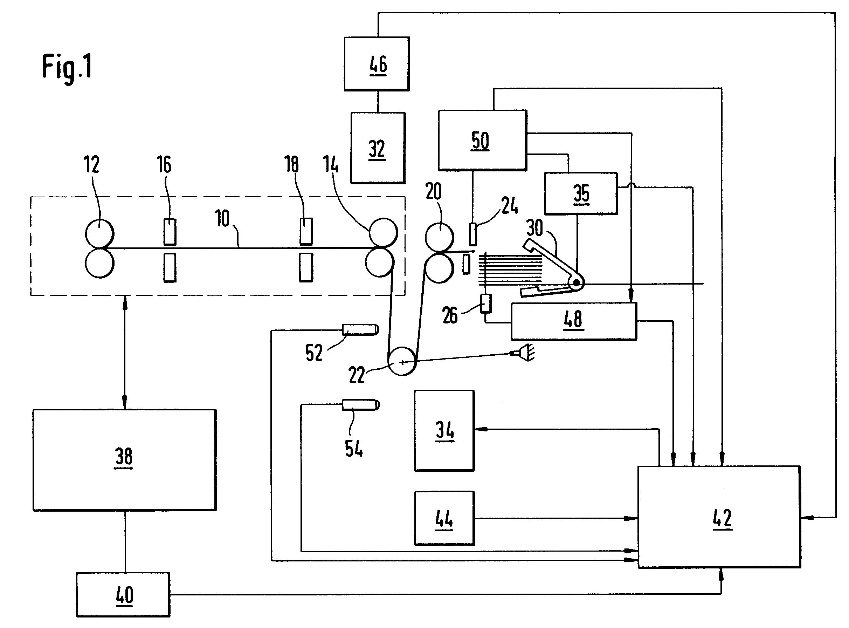

Bei der Ausführungsform gemäß Fig. 1 besteht die durch die gestrichelten Linien angedeutete Schweißvorrichtung aus den Vorzugswalzenpaaren 12 und 14 und den zwischen diesen angeordneten quer zur Schlauchfolienbahn 10 verlaufenden Schweißbackenpaaren 16 und 18. Die Schweißbackenpaare 16 und 18 sind um eine Beutellänge voneinander versetzt und parallel zueinander angeordnet. In Fig. 1 ist der das Vorzugsrollenpaar 14 antreibende Servo-Motor mit 32 bezeichnet. Ebenso wird das Vorzugsrollenpaar 12 wie auch die entsprechenden Schweißbackenpaare 16 und 18 durch hier nicht näher dargestellte Servo-Motoren angetrieben. Sämtliche Servo-Motoren werden über die Hauptsteuerung 38, mittels der insbesondere die Taktzahl 40 und auch die Beutel- bzw. Sackabschnittlängen eingestellt werden, angesteuert. Bei der hier beschriebenen Vorrichtung wird also die Schlauchfolienbahn 10 gemäß der von der Hauptsteuerung 38 vorgegebenen kontinuierlichen Taktzahl vorgezogen und während eines Zeitinvervalls gleichzeitig mittels der Schweißbackenpaare 16 und 18 geschweißt.

Dieser Schweißvorrichtung nachgeordnet ist ein Vorzugswalzenpaar 20, das unmittelbar vor einem Messer 24 angeordnet ist. Das Vorzugswalzenpaar 20 ist in der Ausführungsform nach Fig. 1 über einen Servo-Motor 34 intermittierend angetrieben. Das in Vorzugsrichtung der Schlauchfolienbahn hinter dem Vorzugswalzenpaar 20 angeordnete Messer 24 wird ebenfalls über einen Servo-Motor angetrieben. Das Messer 24 schneidet die Schlauchfolienbahn kurz vor oder hinter den jeweiligen Querschweißnähten mit einer Frequenz, die ungefähr doppelt so hoch ist, wie die Taktfrequenz des Schlauchfolienbahnvorzuges in der Querschweißvorrichtung. Die entsprechenden Beutelabschnitte werden auf einer dem Messer nachgeordneten Nadelschiene 26 aufgenadelt, wobei der Antrieb der Nadelschiene mit 48 in Fig. 1 angegeben ist. Mit einem über einen Antrieb 35 angetriebenen Greifer 30 werden die Beutel nach Erreichen einer vorgegebenen Stapeldicke erfaßt und abtransportiert.

Zwischen dem Vorzugswalzenpaar 14 und dem Vorzugswalzenpaar 20 ist eine Tänzerwalze 22 angeordnet, über welche die bereits quer geschweißte Schlauchfolienbahn 10 geführt wird. Darüber hinaus sind zwei Fotozellen 52 und 54 in der Vorrichtung angeordnet, mittels derer entsprechende Grenzausschläge der Tänzerwalze 22 erfaßt werden können.

Die Vorrichtung gemäß diesem Ausführungsbeispiel weist eine Steuerung 42 auf, welche zur entsprechenden Steuerung des Vorzugswalzenpaares 20 über den Servo-Motor 34 und des Messers 24 über den nicht dargestellten Servo-Motor dient. In die Steuervorrichtung wird zunächst einmal die Taktzahl 40 der Hauptsteuerung 38 eingespeist. Darüber hinaus wird ein in dem Vorzug des Vorzugswalzenpaars 14 entsprechendes Signal über einen Impulsgeber 46 des Servo-Motors 32 an die Steuerung 42 gegeben. Gleichzeitig erhält die Steuerung 42 ein Signal aus dem Impulsgeber 44 des Servo-Motors 34, welcher das Vorzugswalzenpaar 20 antreibt. Weitere Signale erhält die Steuerung 42 von dem Antrieb der Nadelschiene 48 und dem Greiferantrieb 35 sowie einem dem Messer 24 zugeordneten Zähler 50. Entsprechend dieser Signale kann nun die Steuerung den Servo-Motor 34 des Vorzugswalzenpaars 20 und gegebenenfalls den Servo-Motor des Messers 24 ansteuern. Schließlich werden gegebenenfalls noch Signale der Fotozellen 52 und 54 in die Steuerung eingegeben.

Die Funktionsweise der hier beschriebenen Ausführungsformen der Erfindung ist folgende: Zunächst wird die Vorzugstaktzahl der Querschweißvorrichtung konstant durch die Hauptsteuerung 38 vorgegeben. Die Schweißbackenpaare 16 und 18 werden entsprechend der gewünschten Beutellänge in der Querschweißvorrichtung justiert. Die Vorzugstaktzahl 40 wird an die Steuerung 42 weitergegeben. Gleichzeitig wird das Vorzugssignal des Vorzugswalzenpaars 14 über den Impulsgeber 46 an die Steuerung 42 weitergegeben. Die Schlauchfolienbahn 10 wird an das Vorzugswalzenpaar 20 vorgezogen und vom Messer 24 geschnitten. Anschließend werden die Beutelabschnitte bis zum Erreichen einer vorgegebenen Beutelzahl, beispielsweise einer Zahl von 100 Beuteln, aufgenadelt. Die Beutelzahl wird über den Zähler 50 erfaßt. Nach Erreichen der gewünschten Stapelzahl wird ein entsprechendes Signal vom Zähler 50 an den Greiferantrieb 35 bzw. den Nadelschienenantrieb 48 und auch an die Steuerung 42 abgegeben. Nun wird die Nadelschiene 26 entsprechend aus dem Stapel herausgefahren und dieser wird über den Greifer 30 abtransportiert. Entsprechende Signale gehen vom Greiferantrieb 35 und dem Nadelschienenantrieb 48 ebenfalls an die Steuerung 42. Während der Zeit, in welcher der Greiferantrieb 35 und der Nadelschienenantrieb 48 arbeiten, muß zumindest das Vorzugswalzenpaar 20 angehalten werden. Vorzugsweise sollte auch das Messer 24 angehalten werden. Dieses kann aber auch kontinuierlich weiterlaufen. Die während der Zeit des Stapelabtransports aus der Querschweißvorrichtung, die mit gleicher Taktzahl kontinuierlich weiterläuft, austretende Schlauchfolienbahn 10 wird über eine Tänzerwalze 22 in einer entsprechenden Schlaufe, wie sie in Fig. 1 angedeutet ist, geführt. Nach Transport des Beutelstapels wird über die Steuerung 42 das Vorzugswalzenpaar 20 wieder mit einer vorgegebenen Umlaufzahl in Bewegung gesetzt. Dabei wird die Taktfrequenz etwas höher eingestellt als die doppelte Taktfrequenz, mit welcher die Schlauchfolienbahn 10 in die Querschweißvorrichtung vorgezogen wird. Hierdurch wird die entsprechend um die Tänzerwalze 22 verlaufende Schlaufe der Schlauchfolienbahn 10 gekürzt. Dabei wird die Erhöhung der Taktfrequenz des Vorzugswalzenpaars 20 so gewählt, daß die zwischengespeicherte Bahnlänge der Schlauchfolienbahn 10 bis zum nächsten Abtransport des Beutelstapels wieder abgebaut ist. Sollte nun aber die Taktfrequenz zu groß gewählt sein, so wird die Tänzerwalze 22 über die Fotozelle 52 erfaßt, wodurch ein entsprechendes Signal an die Steuerung 42 gegeben wird. Nun wird die Taktzahl um einen vorgebbaren Betrag vermindert, so daß die entsprechende Schlaufe der Schlauchfolienbahn 10 im nachfolgenden Betrieb wieder vergrößert wird. Entsprechendes gilt für das Erreichen der unteren Fotozelle 54.

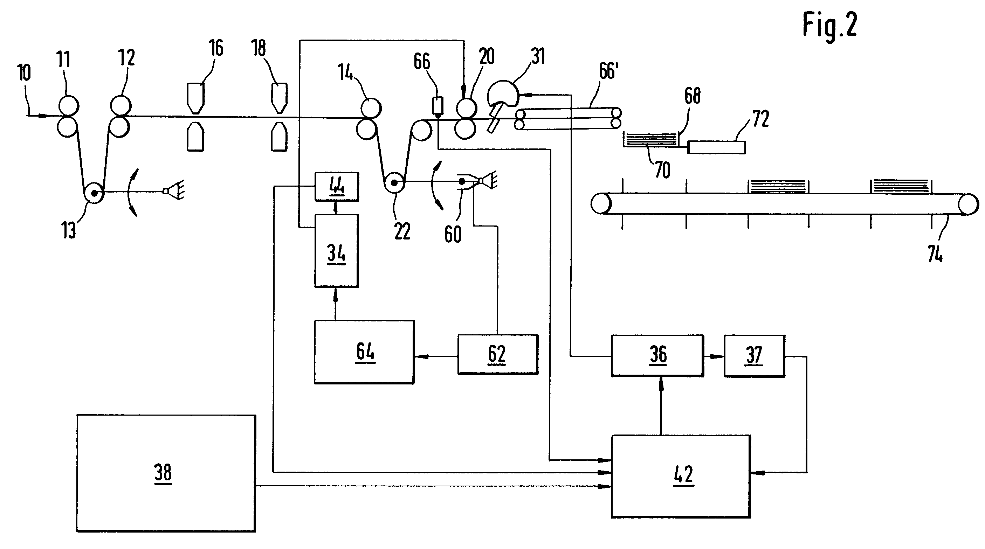

Die Ausführungsform gemäß Fig. 2 arbeitet grundsätzlich ähnlich zu derjenigen gemäß Fig. 1. Daher sind Vorrichtungsteile mit identischer Funktion hier mit identischen Bezugszeichen versehen. Bei diesem Ausführungsbeispiel weist die Schweißvorrichtung zusätzlich zu den Vorzugswalzenpaaren 12 und 14, mittels denen die Schlauchfolienbahn 10 intermittierend vorgezogen wird, noch ein Vorzugswalzenpaar 11 auf, welches dem Vorzugswalzenpaar 12 in Bewegungsrichtung der Schlauchfolienbahn vorgeschaltet ist und diese kontinuierlich vorzieht. Zum Ausgleich zwischen diesem kontinuierlichen Vorzug und dem intermittierenden Vorzug des Vorzugswalzenpaares 12 bzw. des Vorzugswalzenpaares 14 ist eine zusätzliche Tänzerwalze 13 vorgesehen, um welche die Schlauchfolienbahn geführt ist. In dieser Ausführungsform wird das Verzugswalzenpaar 20 kontinuierlich angetrieben.

Als Zähler dient in dieser Ausführungsform eine oberhalb der Bahn angeordnete Fotozelle 66, mittels welcher entsprechende Druckmarken auf der Schlauchfolienbahn 10 erfaßt werden. Das Signal wird an die Steuerung 42 weitergegeben. Als Messer dient hier ein rotierendes Messer 31, welches über einen Servo-Motor 36 entsprechend der über die Steuerung 42 vorgegebenen Taktzahl angetrieben wird. Dabei ist es vorteilhaft, wenn das Messer geringfügig schneller als die eigentlich vorzugebende Taktzahl läuft, da durch diesen entsprechenden Vorlauf ein entsprechend guter Schnitt erzielt wird. Dem rotierenden Messer 31 ist in Vorzugsrichtung der Schlauchfolienbahn 10 ein entsprechendes Transportband 66' zum Erfassen und Abtransport der jeweils abgeschnittenen Beutel nachgeschaltet. Das Transportband 66' transportiert die Beutel in eine entsprechende Kassette 68, in welcher die Beutel bis zum Erreichen der vorgegebenen Stapelhöhe gestapelt werden. Nach Erreichen der vorgegebenen Stapelhöhe wird über einen entsprechenden Pneumatikzylinder 72 der Kassettenboden 70 weggezogen, so daß die Stapel auf ein Kassettenband 74 abgelegt werden, das zum Abtransport der Beutelstapel dient.

Im Unterschied zu dem Ausführungsbeispiel gemäß Fig. 1 werden die Grenzauslenkungen der Tänzerwalze 22 nicht durch Fotozellen, sondern durch eine Schaltgabel 60 angezeigt. Hier wird durch entsprechenden elektrischen Kontakt ein oberes bzw. unteres Grenzsignal ausgegeben. Das Signal wird über den Potentiometer 62 an den Frequenzumrichter 64 und unmittelbar auf den Servo-Motor 34, der das Vorzugswalzenpaar 20 antreibt, gegeben. Von dem dem Servo-Motor 34 nachgeschalteten Impulsgeber 44 wird ein entsprechendes Signal an die Steuerung 42 gegeben, die wiederum die Umlaufzahl des rotierenden Messers über den Servo-Motor 36 steuert.

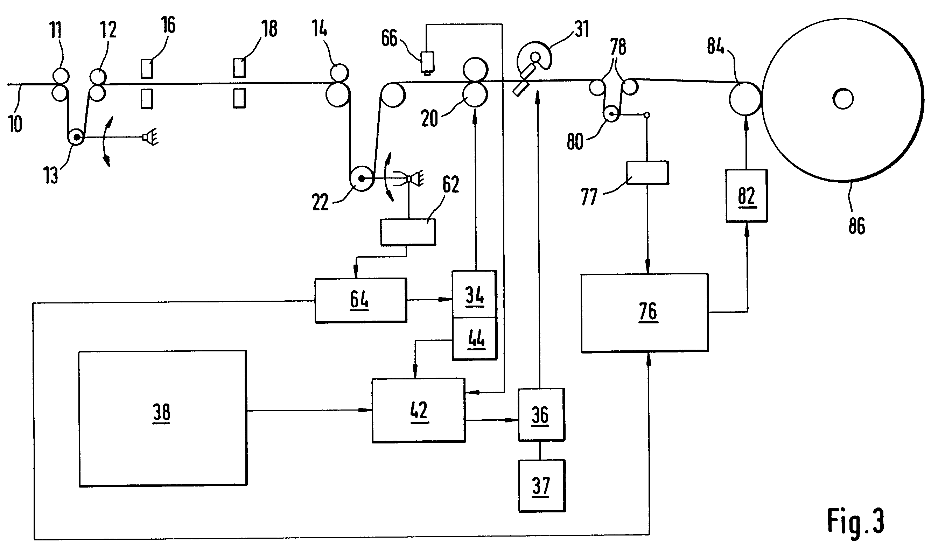

Die Ausführungsform gemäß Fig. 3 entspricht in den im folgenden nicht näher dargelegten Merkmalen denjenigen gemäß Fig. 2. Ein grundsätzlicher Unterschied zu der Ausführungsform gemäß Fig. 2 besteht nun darin, daß hier nicht einzelne Beutelabschnitte von der Schlauchfolienbahn abgeschnitten werden, sondern daß die Schlauchfolienbahn an den entsprechenden Stellen nur mittels eines rotierenden Perforationsmessers 31 querperforiert wird. Somit wird die gesamte Schlauchfolienbahn 10 - nun allerdings mit den entsprechenden Schweißnähten und Querperforationen - auf die Wiederaufwicklung 86 aufgewickelt. Hierdurch bedingt, unterscheidet sich die in Fig. 3 dargestellte Vorrichtung von der Vorrichtung emäß Fig. 2 im wesentlichen dadurch, daß eine Andruckrolle 84 vorgesehen ist, die zur störungsfreien Wiederaufwicklung der Schlauchfolienbahn dient. Die Andruckrolle 84 wird über eine Steuerung 76 und einen durch diesen gesteuerten Servo-Motor 82 gesteuert angetrieben. In die Steuerung 76 wird ein über die Schaltgabel 60 von der Tänzerwalze 22 abgegriffenes Signal von dem Potentiometer 62 über den Frequenzumrichter 64 eingegeben. Hier wird ein der Auslenkung der Tänzerwalze entsprechendes Signal als Leitwert vorgegeben. Uber eine weitere dem rotierenden Perforationsmesser 31 nachgeschaltete Tänzerwalze 80 ist eine weitere Schlaufe der Schlauchfolienbahn gelegt. Die Schlaufe verläuft von zwei Walzen 78 aus um die Tänzerwalze 80. Die Auslenkung dieser Tänzerwalze 80 wird über einen Potentiometer als Korrektursignal in die Steuerung 76 eingegeben.

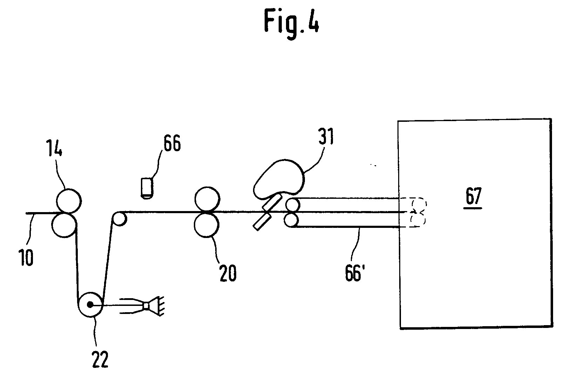

Das Ausführungsbeispiel gemäß Fig. 4 entspricht in sämtlichen wesentlichen Merkmalen demjenigen gemäß Fig. 2. Ein Unterschied besteht hier lediglich darin, daß die durch das rotierende Messer 31 geschnittenen und durch das Transportband 66' vorwärtstransportierten Sackabschnitte unmittelbar in eine Füllmaschine 67 transportiert werden, wo die Sackabschnitte entsprechend befüllt und anschließend verschlossen werden.

## Patentansprüche

1. Vorrichtung zum Anbringen von Querschweißnähten und Quertrennschnitten bzw. Querperforationslinien an einer intermittierend vorgeschobenen und/oder vorgetragenen Schlauch- oder Halbschlauchfolienbahn aus thermoplastischem Kunststoff mit jeweils zusammenwirkenden Vorzugswalzenpaaren, einer Querschweißvorrichtung und einer Trennschnitt- bzw. Perforationslinienvorrichtung,
**dadurch gekennzeichnet,**
daß die zwischen zwei Vorzugswalzenpaaren (12, 14) angeordnete Querschweißvorrichtung aus mindestens zwei quer zur Schlauchfolienbahn (10) ausgerichteten Schweißbackenpaaren (16, 18) besteht, die um wenigstens eine Beutellänge in Bewegungsrichtung der Schlauchfolienbahn (10) voneinander beabstandet sind und
daß dieser Querschweißvorrichtung ein einziges quer zur Schlauchfolienbahn (10) verlaufendes Trenn- bzw. Perforationsmesser (24; 31) nachgeordnet ist.

2. Vorrichtung nach Anspruch 1, dadurch gekennzeichnet, daß vor dem Trenn- bzw. Perforationsmesser (24; 31) ein weiteres Vorzugswalzenpaar (20) angeordnet ist und daß zwischen dem in Bewegungsrichtung hinteren Vorzugswalzenpaar (14) der Querschweißvorrichtung und dem weiteren Vorzugswalzenpaar (20) eine Tänzerwalze (22) angeordnet ist, über die die Schlauchfolienbahn (10) geführt ist.

3. Vorrichtung nach Anspruch 2, dadurch gekennzeichnet, daß zwei Fotozellen (52, 54) im Bewegungsbereich der Tänzerwalze angeordnet sind, die die Grenzauslenkung der Tänzerwalze (22) erfassen.

4. Vorrichtung nach Anspruch 2, dadurch gekennzeichnet, daß eine Schaltgabel (60) im Schwenkbereich des Gestänges der Tänzerwalze (22) angeordnet ist, die die Grenzauslenkung der Tänzerwalze (22) erfaßt.

5. Vorrichtung nach einem der Ansprüche 1-4, dadurch gekennzeichnet, daß insbesondere die Vorzugswalzenpaare (12, 14, 20) und das Trenn- bzw. Perforationsmesser (24; 31) über Servo-Motoren (32, 34, 36) gesteuert antreibbar sind.

6. Vorrichtung nach einem der Ansprüche 1-5, dadurch gekennzeichnet, daß eine Hauptsteuerung (38) zur Steuerung der Gesamtmaschine und eine Steuerung (42) zur Steuerung des Vorzugswalzenpaares (20) vor dem Trenn- bzw. Perforationsmesser (24; 31) bzw. gegebenenfalls zusätzlich zur Steuerung des Trenn- und Perforationsmessers (24; 31) vorgesehen ist.

7. Vorrichtung nach einem der Ansprüche 1-6, dadurch gekennzeichnet, daß für den Fall, daß ein Perforationsmesser (31) vorhanden ist, in Bahnvorzugsrichtung gesehen hinter diesem Perforationsmesser (31) eine über einen Servomotor (82) antreibbare mit einer Wiederauswicklung (86) zusammenwirkende Andruckrolle (84) angeordnet ist, die über eine weitere Steuerung ansteuerbar ist.
